# EUROPÄISCHE PATENTSCHRIFT

(11) **EP 1 186 856 B1**
(45) Veröffentlichungstag und Bekanntmachung des Hinweises auf die Patenterteilung: **01.10.2008**
(21) Anmeldenummer: 01118570.9
(22) Anmeldetag: 02.08.2001
(51) Int. Cl.: G01B 11/24, G01B 15/04, G01B 17/06, B61K 9/02

(54) **Vorrichtung zum Messen von Profilen**
Device for measuring profiles
Dispositif de mesure des profils

(30) Priorität: 06.09.2000 DE 10044157
(43) Veröffentlichungstag der Anmeldung: 13.03.2002
(73) Patentinhaber: Pieper, Siegfried, 67549 Worms (DE); Rottner, Franz, 67551 Worms (DE)
(72) Erfinder: Pieper, Siegfried, 67549 Worms (DE); Rottner, Franz, 67551 Worms (DE)
(74) Vertreter: Thews, Gustav

(56) Entgegenhaltungen:
- DE-A- 19 646 098
- US-A- 4 699 478
- US-A- 5 903 355

## Beschreibung

Die Erfindung bezieht sich auf eine Vorrichtung zum Messen von Profilen von Fahrzeugen zu Land, zur Luft oder zu Wasser oder anderen zwei- oder dreidimensionalen Gegenständen unter Verwendung eines oder mehrerer Messwertaufnehmer.

Es sind allgemein Vorrichtungen zum Erfassen von Profilen bekannt, insbesondere von Profilen von Fahrzeugen der Bundesbahn, die hierzu durch einen entsprechenden Rahmen gefahren werden, der auf einem Untergrund aufsteht. Durch das Durchfahren derartiger Profile von Fahrzeugen der Bundesbahn soll sichergestellt werden, dass auf den Gleisen der Bundesbahn keine Fahrzeuge bewegt werden, die dieses Profil überschreiten. Ist der Querschnitt des Fahrzeugs größer als das Durchlassprofil der Vorrichtung, so wird dies durch eine entsprechende Vorrichtung erfasst und der Bedienungsperson übermittelt, so dass diese daraus schließen kann, dass das Fahrzeug für den Schienentransport zu groß ist.

Es ist ferner eine Einrichtung zum Messen von Profilen, insbesondere von Schienenfahrzeugen, bekannt (DE 40 15 086 A1), die zur Überprüfung der Profileinhaltung und Feststellung von Profilüberschreitungen bei Schienenfahrzeugen dient. Hierzu wird an einem Nullgleis ein Messportal ortsfest oder auf Gleisen verfahrbar angeordnet. An den Stützen des Messportals ist je ein berührungslos messendes Längenmessgerät in den Stützen vertikal verschieblich angebracht. Die ermittelten Messpunkte werden in einer Rechnereinheit als Linienzug des Schienenfahrzeug-Profils gebildet, auf dem Monitor oder Drucker dargestellt und der ermittelte Umriss mit dem vorgeschriebenen Eisenbahnprofil verglichen. Diese Vorrichtung ist aufwendig und teuer, insbesondere auch störanfällig wegen der Verschiebbarkeit der Längenmesseinrichtung.

Eine weitere Druckschrift (DE 30 05 493 A1) zeigt eine Vorrichtung zum Messen von Profilen von Fahrzeugen unter Verwendung mehrerer Messwertaufnehmer, wobei mit der Vorrichtung ein berührungsloses Abtasten der Kontur des einem Arbeitsvorgang unterworfenen Objekts erfolgen soll. Die Vorrichtung zeigt hierzu mehrere Messwertaufnehmer, wobei die Vorrichtung einen auf einem Untergrund aufstehenden Rahmen zeigt, durch den das Fahrzeug hindurchbewegt werden kann. An dem Rahmen sind die Messaufnehmer angeordnet, und Lichtstrahlen werden von Emittern emittiert und Empfängern zugeführt, wobei den Empfängern eine Auswerteeinheit zugeordnet ist, die eine Störung bei der Emittierung oder bei Eintritt eines Gegenstands in den Wellen- oder Strahlenverlauf erfasst und als Störgröße aufzeichnet.

Gemäß einer anderen Druckschrift (DE 36 24 782 A1) ist ebenfalls eine Einrichtung zum berührungslosen Erfassen der Kontur von Prüflingen bekannt, insbesondere von Kraftfahrzeugen. Zwischen dem Strahlprojektor und der Sensoranordnung, die gleichachsig angeordnet sind, einerseits und einer retroreflektierenden Projektionsfläche ist ein zu vermessender Prüfling angeordnet. Der Prüfling sowie der Projektor und die Sensoranordnung sind quer zur Achse relativ bewegbar. Zwecks Vermeidung der Erzeugung von fehlerhaften Positionierungssignalen durch Reflexion des Lichtstrahls am Prüfling erfolgt die Erzeugung eines Positionierungssignals nur dann, wenn der Prüfling eine solche Relativlage einnimmt, dass er den Schwerpunktstrahl antastet.

Die US 5,903,355 beschreibt eine Vorrichtung zum Detektieren von Gegenständen im Bereich eines Messrahmens durch Einsatz eines Emitters sowie eines Empfängers und zweier Reflexionsspiegel. Der Empfänger erfasst das jeweils vorhandene Reflexionsmuster zwecks Vergleichs mit hinterlegten Konturmustern. Der eingesetzte Laserstrahl ist mittig oberhalb des Objektes angeordnet und alterniert zum Zweck der Bildung einer Messebene fächerförmig, wobei so genannte Messschatten generiert werden. Die tatsächliche Kontur des im Rahmen befindlichen Objektes oder Abweichungen der Kontur werden nicht erfasst.

Mit allen bekannten Vorrichtungen kann jedoch nicht das Gesamtprofil in seiner Höhe, Länge und Breite genau abgetastet werden. Außerdem sind diese Vorrichtungen relativ aufwendig und teuer.

Der Erfindung liegt die Aufgabe zugrunde, eine Vorrichtung zur Messung von Profilen von Gegenständen derart auszubilden und anzuordnen, dass die Nachteile der im Stand der Technik bekannten Vorrichtungen überwunden werden.

Gelöst wird die Aufgabe durch die Merkmale des unabhängigen Anspruchs 1.

Zudem kann es vorteilhaft sein, dass die Reflektoren an den Innenseiten des Rahmens angeordnet sind.

Auch kann es vorteilhaft sein, dass sechs Reflektoren vorgesehen sind.

Vorteilhaft kann es auch sein, dass ein oder mehrere Reflektoren auf mindestens je einer Achse angeordnet und über mindestens einen angeordneten Motor antreibbar sind.

Ferner kann es vorteilhaft sein, dass an einem Träger des Rahmens ein Scanner zum Erkennen der Wagennummer vorgesehen ist.

Vorteilhaft kann es außerdem sein, dass eine Schutzvorrichtung vorgesehen ist und die aus dem Rahmen, den Reflektoren, dem Emitter und dem Empfänger gebildete Laserstrahleneinrichtung oder deren Teile im Bereich oder hinter der Schutzvorrichtung angeordnet oder von dieser umgeben sind.

Ferner kann es vorteilhaft sein, dass ein oder mehrere Spiegel auf mindestens je einer Achse angeordnet und über mindestens einen Motor antreibbar sind.

Durch den vorteilhaften Anbau eines oder mehrerer Spiegel auf einer Drehachse können die auf der Oberfläche des Spiegels abgelagerten Schmutzpartikel fortlaufend abgeschleudert und somit der Spiegel sauber gehalten werden. Durch die Verwendung einer Schutzvorrichtung wird verhindert, dass die einzelnen Teile der Laservorrichtung oder der Einscanvorrichtung zur Abscannung einer Außenkontur, beispielsweise eines Fahrzeugs, geschützt werden. Der Laserstrahl kann ohne Weiteres durch Glasteile hindurchtreten.

Zudem kann es vorteilhaft sein, dass mehrere dieser Laserstrahleinrichtungen mit umlaufenden Laserstrahlen hintereinander angeordnet sind.

Weitere Vorteile und Einzelheiten der Erfindung sind in den abhängigen Ansprüchen und in der Beschreibung erläutert und in einer Figur dargestellt.

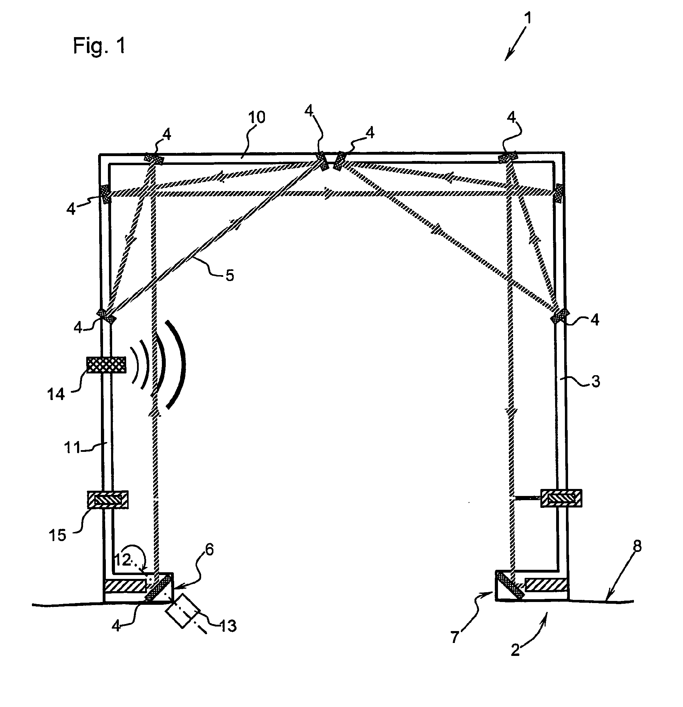

In der Zeichnung ist mit 1 die Vorrichtung zum Messen von Profilen von Gegenständen bzw. Fahrzeugen bezeichnet, insbesondere von Fahrzeugen der Bundesbahn, die auf Gleiskörpern bewegt werden. Die Vorrichtung 1 steht auf einem festen Untergrund bzw. Boden 8 und besteht aus einem in etwa rechteckförmig ausgebildeten Rahmen 3, der aus einzelnen in der Zeichnung nicht weiter dargestellten Profilträgern gebildet sein kann, die an ihren Knotenpunkten miteinander verschraubt bzw. derart verbunden sind, daß eine Anpassung des Rahmens an eine Außenkontur eines Gegenstands möglich ist. Zu der Vorrichtung 1 zum Messen der Profile gehört ein Messwertaufnehmer 2, ein Emitter 6 bzw. eine Laserdiode, über die ein Laserstrahl an der Innenseite des Rahmens 3 entlanggeschickt wird. Der Laserstrahl wird durch entsprechende Reflektoren 4, die als Spiegel ausgebildet sein können, mehrmals umgelenkt, so dass er schließlich von einem Empfänger bzw. einer Photodiode 7 aufgenommen wird. Die Photodiode 7 ist Teil des Messwertaufnehmers 2 und befindet sich in etwa auf der gleichen Höhe wie der Emitter bzw. die Laserdiode 6.

Die einzelnen Spiegel bzw. Reflektoren 4 befinden sich gemäß Ausführungsbeispiel an der Innenseite des Rahmens 3.

Die einzelnen Reflektoren können so angeordnet bzw. positioniert werden, dass der Strahlenverlauf des Lichtstrahls 5 bzw. des Laserstrahls in etwa einer Außenkontur des zu messenden Fahrzeugs angepasst wird. Die einzelnen Reflektoren bzw. Spiegel können an jeder beliebigen Position am Rahmen 3 befestigt werden, um auf diese Weise den Lichtstrahl bzw. Laserstrahl 5 unterschiedlichen Konturen eines Gegenstands anzupassen. Im Ausführungsbeispiel sind zehn Reflektoren vorgesehen. Die Anzahl der Reflektoren kann entsprechend der Anforderung beliebig variiert werden. Im Ausführungsbeispiel hat der aus dem Emitter 6 austretende Laserstrahl 5 im unteren Bereich einen parallelen Verlauf zur Innenseite des Rahmens 3. Der erste Reflektor 4 befindet sich an der oberen Querstrebe 10 und wird in diesem Bereich um 180° auf einen weiteren Reflektor 4 umgeleitet, der an der vertikalen Strebe 11 befestigt ist. Die vorliegende Zeichnung zeigt, dass der Strahlenverlauf der Außenkontur des Gegenstands bzw. des Waggons entspricht.

Die Laserdiode 6 arbeitet mit Infrarotlicht, so dass dieses vom menschlichen Auge nicht wahrgenommen wird. Die einzelnen Spiegel 4 bzw. Laserspiegel können mit einer Justageeinrichtung ausgerüstet sein, so dass sich die einzelnen Spiegel, wie bereits erwähnt, am Rahmen 3 beliebig verstellen und feststellen lassen können.

Die Photodiode 7, die zur Aufnahme des Lichtstrahls dient, ist als Modul mit einer Verstärkereinheit in einen Raum des Hohlprofils des Rahmens integriert und somit vor Beschädigungen oder Witterungseinflüssen geschützt.

Wie aus der vorliegenden Zeichnung ferner hervorgeht, kann beispielsweise an einem Träger des Rahmens 3 auch ein Scanner bzw. ein Transponder 14 zum Erkennen der Wagennummer vorgesehen sein, um somit eine genaue Identifizierung des Wagens bzw. des Gegenstands vornehmen zu können und jedem einzelnen gemessenen Wagen ein Messprotokoll zuzuordnen.

Die in der Zeichnung dargestellten Spiegel können jeweils auf einer Drehachse 12 angeordnet sein, die über einen Motor, insbesondere einen Elektromotor 13, angetrieben werden, damit die auf der Oberfläche des Spiegels 4 abgelegten Schmutzpartikel fortlaufend abgetragen bzw. abgeschleudert werden.

Im Ausführungsbeispiel kann jeder Spiegel 4 über einen Motor 13 angetrieben werden, obwohl in der Zeichnung nur ein Beispiel dargestellt ist.

In der Zeichnung ist nur ein umlaufender Laserstrahl 5 dargestellt. Es ist jedoch auch möglich, mehrere Laserstrahleinrichtungen 1 mit umlaufenden Laserstrahlen hintereinander anzuordnen, um auch lange beliebige Teile abzuscannen und das Profil des Teils auf einfache Weise vollständig zu erfassen. Die Laserstrahlführung kann so gewählt werden (vgl. hierzu den Laserstrahl 5), dass jede beliebige Außenkontur erfasst werden kann.

Die einzelnen Teile der Lasereinrichtung können auch hinter einer Schutzvorrichtung angeordnet sein, beispielsweise hinter einer Glaswand, die mit dem Rahmenprofil verbunden ist. Auf diese Weise werden Beschädigungen am Laser und deren Teile vermieden.

Zudem ist eine Waggonzähleinrichtung 15 zur Erkennung, bei welchem Waggon überstehende Teile geladen sind, und zur Manipulationseinschränkung vorgesehen.

### Bezugszeichenliste

- 1: Vorrichtung, Laserstrahleinrichtung
- 2: Messwertaufnehmer und/oder Emitter, Laserdiode
- 3: Rahmen
- 4: Reflektoren, Spiegel
- 5: Lichtstrahl, Laserstrahl
- 6: Emitter, Laserdiode
- 7: Empfänger oder Photodiode
- 8: Boden
- 10: Querstrebe
- 11: vertikale Strebe
- 12: Drehachse
- 13: Motor
- 14: Scanner, Transponder
- 15: Waggonzähleinrichtung

## Patentansprüche

1. Laserstrahleinrichtung (1) zum Messen von Profilen von Gegenständen wie Fahrzeuge zu Land, zur Luft oder zu Wasser, aufweisend
a) einen oder mehrere Messwertaufnehmer (2), mit dem zwei- oder dreidimensionale Gegenstände erfasst werden können,
b) einen auf einem Untergrund aufstehenden Rahmen (3), durch den der Gegenstand oder das Fahrzeug hindurchbewegt werden kann,
c) wobei an dem Rahmen (3) zahlreiche mit Abstand angeordnete Reflektoren (4) angeordnet sind, über die ein Lichtstrahl (5) wie Infrarotlicht leitbar sind,
d) einen Laser (6), über den der Laserstrahl (5) emittierbar ist,
e) Reflektoren (4), über die der Laserstrahl (5) einem Empfänger beziehungsweise einer Photodiode (7) zuführbar ist,
f) eine Auswerteeinheit, die dem Empfänger beziehungsweise der Photodiode (7) zugeordnet ist und über die eine Störung bei der Emittierung und/oder bei Eintritt eines Gegenstands in den Strahlenverlauf als Störgröße erfassbar und/oder auswertbar ist,
**dadurch gekennzeichnet, dass** die Laserstrahleinrichtung (1) dazu eingerichtet ist, über den Laser (6) den Laserstrahl (5) entlang der Innenseite des Rahmens (3) zu schicken, wobei der Laserstrahl (5) durch Reflektoren (4) mehrmals umgelenkt wird, so dass der Laser-strahl (5) von dem Empfänger beziehungsweise der Photodiode (7) aufgenommen wird, wobei die einzelnen Reflektoren (4) derart angeordnet sind, dass der Strahlenverlauf des Lichtstrahls (5) in etwa einer Außenkontur eines zu messenden Fahrzeugs angepasst ist.

2. Laserstrahleinrichtung (1) nach Anspruch 1, **dadurch gekennzeichnet, dass** die Reflektoren (4) an den Innenseiten des Rahmens (3) angeordnet sind.

3. Laserstrahleinrichtung (1) nach Anspruch 1 oder 2,
**dadurch gekennzeichnet, dass** sechs Reflektoren (4) vorgesehen sind.

4. Laserstrahleinrichtung (1) nach Anspruch 1, 2 oder 3, **dadurch gekennzeichnet, dass** ein oder mehrere Reflektoren (4) auf mindestens je einer Drehachse (12) angeordnet und über mindestens einen angeordneten Motor (13) antreibbar sind.

5. Laserstrahleinrichtung (1) nach einem der Ansprüche 1 bis 4, **dadurch gekennzeichnet, dass** an einem Träger des Rahmens (3) ein Scanner zum Erkennen einer Wagennummer vorgesehen ist.

6. Laserstrahleinrichtung (1) nach einem der Ansprüche 1 bis 5, **dadurch gekennzeichnet, dass** eine Schutzvorrichtung vorgesehen ist und die aus dem Rahmen (3), den Reflektoren (4), dem Laser (6) und dem Empfänger beziehungsweise der Photodiode (7) gebildete Laserstrahleinrichtung oder deren Teile im Bereich oder hinter der Schutzvorrichtung angeordnet oder von dieser umgeben sind.

7. Anordnung unter Verwendung der Laserstrahleinrichtung (1) nach einem der Ansprüche 1 bis 6, **dadurch gekennzeichnet, dass** mehrere Laserstrahleinrichtungen (1) mit umlaufenden Laserstrahlen (5) hintereinander angeordnet sind.

## Claims

1. A laser beam device (1) for measuring profiles of objects such as motor vehicles to the land, air or water, comprising
a) one or more measurement value recorders (2) with which two- or three-dimensional objects can be assessed
b) a frame (2) which stands on a base through which the object or the vehicle can be moved
c) wherein on the frame (3), numerous reflectors (4) are arranged at a distance, via which a light beam (5) such as infrared light can be guided
d) a laser (6) via which the laser beam (5) can be emitted
e) reflectors (4) via which the laser beam (5) can be guided to a receiver or a photo diode (7)
f) an evaluation unit which is assigned to the receiver or to the photo diode (7) and via which a fault in the emission and/or in the entry of an object into the beam path can be assessed and/or evaluated as a disturbance variable
**characterized in that**
the laser beam device (1) is designed in such a manner that it sends via the laser (6) the laser beam (5) along the inner side of the frame (3), wherein the laser beam (5) is diverted several times by reflectors (4) in such a manner that the laser beam (5) is picked up by the receiver or by the photo diode (7), wherein the individual reflectors (4) are arranged in such a manner that the beam path of the light beam (5) is approximately adapted to an outer contour of a motor vehicle to be measured.

2. A laser beam device (1) according to claim 1, **characterized in that** the reflectors (4) are arranged on the inner sides of the frame (3).

3. A laser beam device (1) according to either of claims 1 or 2, **characterized in that** six reflectors (4) are provided.

4. A laser beam device (1) according to any one of claims 1, 2 or 3, **characterized in that** one or more reflectors (4) are arranged on at least one rotational axis (12) respectively, and can be driven via at least one arranged motor (13).

5. A laser beam device (1) according to any one of claims 1 to 4, **characterized in that** on one bearer of the frame (3), a scanner is provided for detecting a carriage number.

6. A laser beam device (1) according to any one of claims 1 to 5, **characterized in that** a protective device is provided and the laser beam device, or its parts, which are formed from the frame (3), the reflectors (4), the laser (6) and the receiver or photo diode (7) are arranged in the area of or behind the protective device, or are surrounded by said device.

7. An arrangement using the laser beam device (1) according to any one of claims 1 to 6, **characterized in that** several laser beam devices (1) are arranged in succession with encompassing laser beams (5).

## Revendications

1. Equipement de rayons laser (1) pour mesurer des profils d'objets tels que des véhicules sur terre, dans les airs ou sur l'eau, présentant
a) un ou plusieurs enregistreurs de valeurs de mesure (2) avec lesquels des objets en deux ou trois dimensions peuvent être détectés,
b) un cadre (3), posé sur un substrat, à travers lequel l'objet ou le véhicule peut être déplacé,
c) de nombreux réflecteurs (4) étant disposés à intervalles sur le cadre (3), par le biais desquels un rayon lumineux (5) tel qu'une lumière infrarouge peut être guidé,
d) un laser (6), par le biais duquel le rayon laser (5) peut être émis,
e) des réflecteurs (4) par le biais desquels le rayon laser (5) peut être conduit à un récepteur ou une photodiode (7),
f) une unité d'analyse qui est affectée au récepteur ou à la photodiode (7) et par le biais de laquelle une perturbation lors de l'émission et/ou lors de l'entrée d'un objet sur la trajectoire du rayon peut être détectée et/ou analysée en tant que grandeur perturbatrice,
**caractérisé en ce que**
l'équipement de rayons laser (1) est agencé pour envoyer, par le biais du laser (6), le rayon laser (5) le long du côté intérieur du cadre (3), le rayon laser (5) étant dévié à plusieurs reprises par des réflecteurs (4) de sorte que le rayon laser (5) est reçu par le récepteur ou la photodiode (7), les différents réflecteurs (4) étant disposés de sorte que la trajectoire du rayon du rayon lumineux (5) est à peu près adaptée à un contour extérieur d'un véhicule à mesurer.

2. Equipement de rayons laser (1) selon la revendication 1, **caractérisé en ce que** les réflecteurs (4) sont disposés sur les côtés intérieurs du cadre (3),

3. Equipement de rayons laser (1) selon la revendication 1 ou 2, **caractérisé en ce que** six réflecteurs (4) sont prévus.

4. Equipement de rayons laser (1) selon la revendication 1, 2 ou 3, **caractérisé en ce qu'**un ou plusieurs réflecteurs (4) sont disposés respectivement sur au moins un axe de rotation (12) et peuvent être entraînés par le biais d'au moins un moteur (13) mis en place.

5. Equipement de rayons laser (1) selon une des revendications 1 à 4, **caractérisé en ce que**, sur un support du cadre (3), il est prévu un scanner pour la détection d'un numéro de voiture.

6. Equipement de rayons laser (1) selon une des revendications 1 à 5, **caractérisé en ce qu'**un dispositif de protection est prévu et **en ce que** l'équipement de rayons laser formé du cadre (3), des réflecteurs (4), du laser (6) et du récepteur ou de la photodiode (7), ou ses parties sont disposés dans la zone du dispositif de protection ou derrière celui-ci ou sont entourés par celui-ci.

7. Agencement avec utilisation de l'équipement de rayons laser (1) selon une des revendications 1 à 6, **caractérisé en ce que** plusieurs équipements de rayons laser (1) avec des rayons laser (5) rotatifs sont disposés les uns derrière les autres.
